# EUROPEAN PATENT APPLICATION

(11) **EP 4 439 720 A1**
(43) Date of publication of application: **02.10.2024**
(21) Application number: 21965286.4
(22) Date of filing: 29.11.2021
(51) Int. Cl.: H01M 4/485, H01M 4/525

(54) **POSITIVE ELECTRODE ACTIVE MATERIAL, ELECTROCHEMICAL DEVICE AND ELECTRONIC DEVICE**

(71) Applicant: Ningde Amperex Technology Limited, Ningde, Fujian 352100 (CN)
(72) Inventor: LIU, Xiaolang, Ningde, Fujian 352100 (CN)
(74) Representative: Icosa
(86) International application number: PCT/CN2021/134000
(87) International publication number: WO 2023/092555

(57) **Abstract**

A positive electrode active material includes lithium-containing cobalt oxide particles. The lithium-containing cobalt oxide particles include an Mn element and an Ni element. On the basis that the molar content of metal elements except a lithium element in the lithium-containing cobalt oxide particles is 100%, the content of the Mn element is A°lo, and the content of the Ni element is B%, where 0.1 ≤ A + B < 20, and 0.2 ≤ A/B ≤ 9. The positive electrode active material has a relatively stable structure under the high voltage, and has a relatively high discharge gram capacity and a relatively high cycle retention rate.

## Description

### TECHNICAL FIELD

This application relates to the field of energy storage, and in particular, to a positive electrode active material, and an electrochemical device and an electronic device including the positive electrode active material.

### BACKGROUND

Lithium-ion batteries are widely used in portable electronic products, electric transportation, energy reserves and other fields because of high energy density, good cycle performance, environmental protection, safety, no memory effect and the like. In order to meet the needs of social development, the search for lithium-ion batteries with high energy density and power density is an urgent problem to be solved, which requires positive electrode materials used to have a high specific capacity and high voltage platform.

A current commercialized positive electrode material, lithium cobalt oxide, is highly prone to crystal structure collapse and interfacial failure in the high-voltage charging process (>4.6V vs.Li/Li⁺), which not only plays a discharge gram capacity lower than a theoretical value, but also has a rapid cycle decay, making it difficult to satisfy the demand for positive electrode active materials with high energy density in the future.

### SUMMARY

In view of defects in the prior art, this application provides a positive electrode active material. The positive electrode active material has a relatively stable structure under the high voltage, and has a relatively high discharge gram capacity and a relatively high cycle retention rate.

In a first aspect, this application provides a positive electrode active material. The positive electrode active material includes lithium-containing cobalt oxide particles. The lithium-containing cobalt oxide particles include a manganese (Mn) element and a nickel (Ni) element. On the basis that a molar content of metal elements except a lithium element in the lithium-containing cobalt oxide particles is 100%, a molar content of the Mn element is A%, and a molar content of the Ni element is B%, where 0.1 ≤ A + B < 20, and 0.2 ≤ A/B ≤ 9.

According to some implementations of this application, the positive electrode active material includes the lithium-containing cobalt oxide particles with a P6₃mc structure.

In a lithium-containing cobalt oxide with the P6₃mc structure of this application, Ni may be mixed and arranged with Li, occupy Li sites, and form a column effect, which in turn can improve the interlayer structural stability of CoO6. Mn may occupy Co sites, increase Co migration barriers, and inhibit Co dissolution, which in turn can improve the intralayer structural stability of CoO6. By controlling the content of Mn and Ni within the above range, the interlayer and intralayer structural stability of CoO6 can be balanced, and the stability of a whole crystal structure can be improved.

According to some implementations of this application, 0.05 <_ A < 11. In some implementations, 0.05 ≤ B < 10.

In some implementations, 0.1 <_ A + B < 10. In some implementations, 0.2 < A/B <_ 5.

According to some implementations of this application, positive electrode active material particles include a first region and a second region, the first region is a region of 100 nm in a direction from a surface of the positive electrode active material particles to a center of the positive electrode active material particles, and the second region is a region other than the first region.

According to some implementations of this application, the lithium-containing cobalt oxide particles include a first region and a second region, the first region is a region of 100 nm in a direction from a surface of the lithium-containing cobalt oxide particles to a center of the lithium-containing cobalt oxide particles, and the second region is a region other than the first region.

According to some implementations of this application, a content of Mn element in the first region is greater than a content of Mn element in the second region.

According to some implementations of this application, the positive electrode active material satisfies at least one of conditions (a) to (e): (a) on the basis that the molar content of the metal elements except the lithium element in the lithium-containing cobalt oxide particles is 100%, the molar content A₁% of the Mn element in the first region and the molar content A₂% of the Mn element in the second region satisfy: 1 < A₁/A₂ < 5; (b) a molar content of Ni element in the first region is greater than a molar content of Ni element in the second region; (c) on the basis that the molar content of the metal elements except the lithium element in the lithium-containing cobalt oxide particles is 100%, the molar content B₁% of the Ni element in the first region and the molar content B₂% of the Ni element in the second region satisfy 1 < B₁/B₂ < 5; (d) a molar content of Li element in the first region is less than a molar content of Li element in the second region; and (e) the molar content C₁% of the Li element in the first region and the molar content C₂% of the Li element in the second region satisfy 0.5 < C₁/C₂ < 1.

In the lithium-containing cobalt oxide particles of this application, a content of Mn and Ni elements in the first region is higher than a content of Mn and Ni elements in the second region, the content of the Li element in the first region is lower than the content of the Li element in the second region, and a surface layer of the lithium-containing cobalt oxide particles is more lithium-deficient compared to an interior. The lithium-containing cobalt oxide in a lithium-deficient state of the surface layer has a higher conductivity than that in a lithium-full state, which is favorable for the electrical properties. In addition, the lithium-containing cobalt oxide material with the P6₃mc structure has a certain concentration of lithium vacancies that can make the material more stable, while too few lithium vacancies are prone to phase structure transformation and formation of a phase structure of R-3m, which affects the structural stability of the lithium-containing cobalt oxide particles of this application under high voltage conditions.

According to some implementations of this application, the positive electrode active material satisfies at least one of conditions (f) to (h): (f) an intensity of the strongest characteristic peak of Mn 2p in the first region is greater than an intensity of the strongest characteristic peak of Mn 2p in the second region in an XPS spectrum of the positive electrode active material; (g) an intensity of the strongest characteristic peak of Ni 2p in the first region is greater than an intensity of the strongest characteristic peak of Ni 2p in the second region in the XPS spectrum of the positive electrode active material; and (h) an intensity of the strongest characteristic peak of Li 1s in the first region is less than an intensity of the strongest characteristic peak of Li 1s in the second region in the XPS spectrum of the positive electrode active material.

According to some implementations of this application, the positive electrode active material further includes an M element, where the M element includes at least one of aluminum (Al), magnesium (Mg), titanium (Ti), ferrum (Fe), zinc (Zn), copper (Cu), niobium (Nb), chromium (Cr), zirconium (Zr), or sodium (Na). According to some implementations of this application, the positive electrode active material further includes a Z element, where the Z element includes at least one of boron (B), fluorine (F), phosphorus (P), sulfur (S), nitrogen (N), or silicon (Si). Introduction of the M element or the N element can further improve the structural stability of the material.

According to some implementations of this application, the positive electrode active material includes particles with a median particle size Dv50 satisfying 3 µm ≤ Dv50 ≤ 30µm. According to some implementations of this application, a median particle size Dv50 of the lithium-containing cobalt oxide particles satisfies 3 µm ≤ Dv50 ≤ 30 µm. When the particle size is less than 3 µm, a specific surface area of the positive electrode active material particles is too large, the reaction activity is high, and side reactions are prone to occur, which may affect the performance of an electrochemical device. When the particle size exceeds 30 µm, a positive electrode slurry containing the positive electrode active material is difficultly processed into a positive electrode plate, and the kinetic performance of the electrochemical device deteriorates because an ion migration path is too long.

According to some implementations of this application, a preparation method for the positive electrode active material includes subjecting a sodium-containing cobalt oxide and a lithium-containing compound to a solid-phase reaction, where a solid-phase reaction temperature is from 180 °C to 320 °C, and solid-phase reaction time is from 3 h to 12 h.

According to some implementations of this application, the solid-phase reaction temperature is from 180 °C to 320 °C. In some implementations, the solid-phase reaction temperature is from 200 °C to 300 °C. In some implementations, the solid-phase reaction temperature is from 220 °C to 280 °C. In some implementations, the solid-phase reaction temperature is from 240 °C to 260 °C. According to some implementations of this application, the solid-phase reaction time is from 3 h to 12 h. In some implementations, the solid-phase reaction time is from 4 h to 8 h.

According to some implementations of this application, the sodium-containing cobalt oxide has a P6₃/mmc structure. According to some implementations of this application, the lithium-containing compound includes at least one of lithium sulfate, lithium carbonate, lithium nitrate, lithium halide, lithium carboxylate, lithium squarate, lithium alkoxide, or lithium hydroxide.

According to some implementations of this application, a charge gram capacity and a discharge gram capacity of the positive electrode active material are both greater than or equal to 210 mAh/g.

In a second aspect, this application provides an electrochemical device, including a positive electrode plate and a negative electrode plate. The positive electrode plate includes a positive current collector and a positive active layer disposed on a surface of the positive current collector, and the positive active layer includes the positive electrode active material in the first aspect.

According to some implementations of this application, a charge cut-off voltage of the electrochemical device is greater than or equal to 4.6 V.

In a third aspect, this application provides an electronic device, including the electrochemical device in the second aspect.

The positive electrode active material of this application is different from a conventional lithium cobalt oxide with an R-3m structure, and the positive electrode active material of this application is less prone to spinel phase transformation at high voltage, and has a relatively high discharge gram capacity. In addition, a material layer spacing of the positive electrode active material of this application is larger than that of the conventional lithium cobalt oxide, the lithium ion migration energy is lower, and the rate performance is better.

### BRIEF DESCRIPTION OF DRAWINGS

FIG. 1 shows an XRD diagram of a sodium-containing cobalt oxide in Embodiment 1.
FIG. 2 shows an XRD diagram of a lithium-containing cobalt oxide in Embodiment 1 to Embodiment 7.
FIG. 3 shows an XRD diagram of a lithium-containing cobalt oxide in Comparative Embodiment 1 to Comparative Embodiment 2 and Embodiment 1.
FIG. 4 shows XPS diagrams of different deep-section thicknesses of a lithium-containing cobalt oxide material in Embodiment 1.
FIG. 5 shows XPS diagrams of different deep-section thicknesses of a lithium-containing cobalt oxide material in Comparative Embodiment 3.
FIG. 6 shows XPS diagrams of different deep-section thicknesses of a lithium-containing cobalt oxide material in Comparative Embodiment 4.

### DETAILED DESCRIPTION OF EMBODIMENTS

This application is further described below in connection with specific implementations. It should be understood that these specific implementations are used only to illustrate this application and are not intended to limit the scope of this application.

### I. Positive electrode active material

This application provides a positive electrode active material. The positive electrode active material includes lithium-containing cobalt oxide particles. The lithium-containing cobalt oxide particles include Mn element and Ni element. On the basis that a molar content of metal elements except a lithium element in the lithium-containing cobalt oxide particles is 100%, a molar content of the Mn element is A%, and a molar content of the Ni element is B%, where 0.1 ≤ A + B < 20, and 0.2 ≤ A/B ≤ 9.

According to some implementations of this application, the positive electrode active material includes the lithium-containing cobalt oxide particles with a P6₃mc structure.

In a lithium-containing cobalt oxide with the P6₃mc structure of this application, Ni may be mixed and arranged with Li, occupy Li sites, and form a column effect, which in turn can improve the interlayer structural stability of CoO6. Mn may occupy Co sites, increase Co migration barriers, and inhibit Co dissolution, which in turn can improve the intralayer structural stability of CoO6. By controlling the content of Mn and Ni within the above range, the interlayer and intralayer structural stability of CoO6 can be balanced, and the stability of a whole crystal structure can be improved.

According to some implementations of this application, 0.1 <_ A + B < 20. In some implementations, A+B is 1, 2, 3, 4, 5, 6, 7, 8, 9, 11, 12, 13, 14, 16, 18, 19, 19.9 or a value falling within a range formed by any two thereof. In some implementations, 0.1 ≤ A + B < 15. In some implementations, 2 ≤ A + B < 10. In some implementations, 2 ≤ A + B ≤ 9. When 2 ≤ A + B < 10, positive electrode active material particle crystals have a more optimal Li and Mn mixing ratio, and Co sites occupied by Mn are in a more appropriate range, so that the structural stability of the positive electrode active material particle crystals are further improved.

According to some implementations of this application, 0.2 <_ A/B <_ 9. In some implementations, A/B is 0.5, 1, 1.5, 2, 2.5, 3, 3.5, 4, 4.5, 5, 6, 7, 8, or a value falling within a range formed by any two thereof. In some implementations, 0.3 ≤ A/B ≤ 5.

According to some implementations of this application, on the basis that the molar content of the metal elements except the lithium element in the lithium-containing cobalt oxide particles is 100%, the molar content of the Mn element is A°lo, where 0.05 ≤ A < 11. In some implementations, A is 0.5, 1, 3, 5, 7, 9, or a value falling within a range formed by any two thereof. In some implementations, 1 ≤ A < 10. When the value of A is in the above range, the Li and Mn mixing ratio of the positive electrode active material particle crystals is in a better range.

According to some implementations of this application, on the basis that the molar content of the metal elements except the lithium element in the lithium-containing cobalt oxide particles is 100%, the molar content of the Ni element is B%, where 0.05 ≤ B < 10. In some implementations, B is 0.5, 1, 3, 5, 7, 9, or a value falling within a range formed by any two thereof. In some implementations, 1 < B ≤ 7. When the value of B is in the above range, a proportion of Mn occupying the Co sites is in a better range, so that the structural stability of the positive electrode active material particle crystals is improved.

According to some implementations of this application, positive electrode active material particles include a first region and a second region, where the first region is a region of 100 nm in a direction from a surface of the positive electrode active material particles to a center of the positive electrode active material particles, and the second region is a region other than the first region. In some implementations, the second region is a region of 100 nm from a surface of the positive electrode active material particles to a center of the positive electrode active material particles.

According to some implementations of this application, the lithium-containing cobalt oxide particles include a first region and a second region, the first region is a region of 100 nm in a direction from a surface of the lithium-containing cobalt oxide particles to a center of the lithium-containing cobalt oxide particles, and the second region is a region other than the first region. In some implementations, the second region is a region of 100 nm from a surface of the positive electrode active material particles to a center of the positive electrode active material particles.

According to some implementations of this application, a molar content of Mn element in the first region is greater than a molar content of Mn element in the second region. In some implementations, the molar content A₁% of the Mn element in the first region and the molar content A₂% of the Mn element in the second region satisfy: 1 < A₁/A₂ < 5.

According to some implementations of this application, a molar content of Ni element in the first region is greater than a molar content of Ni element in the second region. In some implementations, the molar content B₁% of the Ni element in the first region and the molar content B₂% of the Ni element in the second region satisfy: 1 < B₁/B₂ < 5.

According to some implementations of this application, a molar content of Li element in the first region is less than a molar content of Li element in the second region. In some implementations, the molar content C₁% of the Li element in the first region and the molar content C₂% of the Li element in the second region satisfy: 0.5 < C₁/C₂ < 1.

In the lithium-containing cobalt oxide particles of this application, a content of Mn and Ni elements in the first region is higher than that in the second region, the content of the Li element in the first region is lower than that in the second region, and a surface layer of the lithium-containing cobalt oxide particles is more lithium-deficient compared to an interior. The lithium-containing cobalt oxide in a lithium-deficient state of the surface layer has a higher conductivity than that in a lithium-full state, which is favorable for the electrical properties. In addition, the lithium-containing cobalt oxide material with the P6₃mc structure has a certain concentration of lithium vacancies that can make the material more stable, while too few lithium vacancies are prone to phase structure transformation and formation of a phase structure of R-3m, which affects the structural stability of the lithium-containing cobalt oxide particles of this application under high voltage conditions.

According to some implementations of this application, an intensity of the strongest characteristic peak of Mn 2p in the first region is greater than an intensity of the strongest characteristic peak of Mn 2p in the second region in an XPS spectrum of the positive electrode active material. According to some implementations of this application, an intensity of the strongest characteristic peak of Ni 2p in the first region is greater than an intensity of the strongest characteristic peak of Ni 2p in the second region in the XPS spectrum of the positive electrode active material. According to some implementations of this application, an intensity of the strongest characteristic peak of Li 1s in the first region is less than an intensity of the strongest characteristic peak of Li 1s in the second region in the XPS spectrum of the positive electrode active material.

According to some implementations of this application, the positive electrode active material further includes an M element, where the M element includes at least one of Al, Mg, Ti, Fe, Zn, Cu, Nb, Cr, Zr or Na. According to some implementations of this application, the positive electrode active material further includes a Z element, where the Z element includes at least one of B, F, P, S, N or Si. Introduction of the M element or the N element can further improve the structural stability of the material.

According to some implementations of this application, on the basis that the molar content of the metal elements except the lithium element in the lithium-containing cobalt oxide particles is 100%, the molar content of the Mn element is from 0.01% to 3%.

According to some implementations of this application, the positive electrode active material includes particles with a median particle size Dv50 satisfying 3 µm <_ Dv50 ≤ 30µm. According to some implementations of this application, a median particle size Dv50 of the lithium-containing cobalt oxide particles satisfies 3 µm ≤ Dv50 ≤ 30 µm. In some implementations, the median particle size Dv50 of the lithium-containing cobalt oxide particles is 5 µm, 10 µm, 15 µm, 20 µm, 25 µm, or a value falling within a range formed by any two thereof. When the particle size is less than 3 µm, a specific surface area of the positive electrode active material particles is too large, the reaction activity is high, and side reactions are prone to occur, resulting in failure. When the particle size exceeds 30 µm, a positive electrode slurry containing the positive electrode active material is difficultly processed into a positive electrode plate, and the kinetic performance of an electrochemical device deteriorates because an ion migration path is too long.

According to some implementations of this application, a charge gram capacity and a discharge gram capacity of the positive electrode active material are both greater than or equal to 210 mAh/g. In some implementations, a button cell is made with lithium metal as a negative electrode, and when the cell is charged to a voltage of 4.6 V at 0.1 C under a condition of a temperature of 25 °C and discharged and tested at a rate of 0.1 C, a discharge gram capacity of the positive electrode active material is greater than or equal to 210 mAh/g. In some implementations of this application, a discharge medium voltage of the positive electrode active material is greater than or equal to 4.03 V. The discharge medium voltage of the positive electrode active material can be measured by testing with a Land Battery Tester.

According to some implementations of this application, the button cell is made with lithium metal as the negative electrode, and when the cell is charged to a voltage of 4.7 V at 0.1 C under a condition of a temperature of 25 °C and discharged and tested at a rate of 0.1 C, the discharge gram capacity of the positive electrode active material is greater than or equal to 240 mAh/g. In some implementations of this application, the discharge medium voltage of the positive electrode active material is greater than or equal to 4.03 V.

### II. Preparation method for positive electrode active material

This application further provides a preparation method for a positive electrode active material. The preparation method includes subjecting a sodium-containing cobalt oxide and a lithium-containing compound to a solid-phase reaction, where a solid-phase reaction temperature is from 180 °C to 320 °C, and solid-phase reaction time is from 3 h to 12 h.

According to some implementations of this application, the solid-phase reaction temperature is from 180 °C to 320 °C. In some implementations, the solid-phase reaction temperature is 190 °C, 210 °C, 250 °C, 260 °C, 270 °C, or a value falling within a range formed by any two thereof. In some implementations, the solid-phase reaction temperature is from 200 °C to 300 °C. In some implementations, the solid-phase reaction temperature is from 220 °C to 280 °C. In some implementations, the solid-phase reaction temperature is from 240 °C to 270 °C.

According to some implementations of this application, the solid-phase reaction time is from 3 h to 12 h. In some implementations, the solid-phase reaction time is from 4 h to 8 h. In some implementations, the solid-phase reaction time is from 5 h to 7 h.

According to some implementations of this application, the sodium-containing cobalt oxide has a P6₃/mmc structure. According to some implementations of this application, a preparation method for the sodium-containing cobalt oxide includes the following steps: S1: providing a compound containing a cobalt element, a manganese element and a nickel element, and optionally containing an M element and/or a Z element; and S2: mixing the compound in S1 with a sodium salt, and roasting, to generate the sodium-containing cobalt oxide.

According to some implementations of this application, in S2, a roasting temperature is from 750 °C to 1050 °C, and roasting time is from 24 h to 72 h. In some implementations, the sodium salt includes sodium carbonate. In some implementations, a molar ratio of the compound to the sodium salt in S1 is from 0.3:1 to 0.5:1.

According to some implementations of this application, preparation of the compound described in S1 may include the following steps: S11: mixing a cobalt salt, a manganese salt, a nickel salt, and an optional M salt with a solvent to obtain a first mixed solution; S12: mixing the first mixed solution with a precipitant and an optional complexing agent, and carrying out a precipitation reaction at a pH from 5 to 9, to obtain a precipitate; and S13: optionally mixing the precipitate with a Z source and then roasting the same, or directly roasting the precipitate.

According to some implementations of this application, preparation of the compound described in S 1 includes the following steps: S11': mixing a cobalt salt, a manganese salt, and a nickel salt with a solvent to obtain a first mixed solution; S12': mixing the first mixed solution with a precipitant and an optional complexing agent, and carry out a precipitation reaction at a pH from 5 to 9, to obtain a precipitate; and S13': mixing the precipitate with the optional M salt and/or a Z source and then roasting the same.

According to some implementations of this application, the cobalt salt includes at least one of cobalt sulfate, cobalt nitrate, cobalt chloride, or cobalt acetate. According to some implementations of this application, the manganese salt includes at least one of manganese sulfate, manganese nitrate, manganese chloride, or manganese acetate. According to some implementations of this application, the nickel salt includes at least one of nickel sulfate, nickel nitrate, nickel chloride, or nickel acetate.

According to some implementations of this application, the M salt includes at least one of a chloride, acetate, sulfate, or nitrate containing an M element. In some implementations, the M element includes at least one of Al, Mg, Ti, Fe, Zn, Cu, Nb, Cr, Zr, or Na.

According to some implementations of this application, the Z source includes a boride, an oxide, a sulfide, a sulfate, a chloride, a fluoride, a silicone-containing organic substance, or the like. In some implementations, a Z element includes at least one of B, F, P, S, N, or Si.

According to some implementations of this application, in S13 and S13', the roasting temperature is from 500 °C to 750 °C, and the roasting time is from 8 h to 24 h.

According to some implementations of this application, the solvent includes at least one of water, methanol, ethanol, acetone, isopropanol or hexanol.

According to some implementations of this application, the precipitant includes at least one of sodium hydroxide, potassium hydroxide, sodium bicarbonate, potassium bicarbonate, sodium carbonate, or potassium carbonate.

According to some implementations of this application, the complexing agent includes at least one of ammonia, ammonium carbonate, ammonium bicarbonate, urea, hexamethylenetetramine, ethylenediaminetetraacetic acid, citric acid, or ascorbic acid.

According to some implementations of this application, the lithium-containing compound includes at least one of lithium sulfate, lithium carbonate, lithium nitrate, lithium halide, lithium carboxylate, lithium squarate, lithium alkoxide, or lithium hydroxide.

### III. Electrochemical device

This application provides an electrochemical device, including a positive electrode plate and a negative electrode plate. The positive electrode plate includes a positive current collector and a positive active layer disposed on a surface of the positive current collector, and the positive active layer includes the positive electrode active material in the first aspect.

According to some implementations of this application, the positive current collector may be metal foil or a composite current collector. For example, aluminum foil may be used. The composite current collector may be formed by forming a metal material (copper, copper alloy, nickel, nickel alloy, titanium, titanium alloy, silver, silver alloy, and the like) on a polymer substrate.

According to some implementations of this application, a positive electrode active material and a binder (a conductive material, a thickening agent and the like may be further used according to needs) are mixed to be prepared into a sheet, and the obtained sheet is crimped to the positive current collector, or these materials are dispersed in a liquid medium to make a slurry, and the slurry is coated to the positive current collector and dried. In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, a polymer including ethylidene oxygen, polyvinylpyrrolidone, polyurethane, polytetrafluoroethylene, 1,1-polyvinylidene fluoride, polyethylene, polypropylene, styrene-butadiene rubber, acrylated styrene-butadiene rubber, epoxy resin, nylon and the like. In some embodiments, the conductive material includes, but is not limited to: a carbon-based material, a metal-based material, a conductive polymer, and mixtures thereof. In some embodiments, the carbon-based material is selected from natural graphite, artificial graphite, carbon black, acetylene black, Ketjen black, carbon fiber, or any combination thereof. In some embodiments, the metal-based material is selected from metal powders, metal fibers, copper, nickel, aluminum, or silver. In some embodiments, the conductive polymer is a polyphenylene derivative.

According to some implementations of this application, the negative electrode plate includes a negative current collector and a negative active layer disposed on a surface of the negative current collector.

According to some implementations of this application, the negative active layer includes a negative electrode active material, and the negative electrode active material may include a material that reversibly intercalates and deintercalates lithium ions, a lithium metal, a lithium metal alloy, or a transition metal oxide. In some implementations, the negative electrode active material includes at least one of a carbon material or a silicon material, the carbon material includes at least one of graphite, or hard carbon, and the silicon material includes at least one of silicon, a silicon oxygen compound, a silicon carbon compound, or a silicon alloy.

According to some implementations of this application, the negative active layer includes a binder, and the binder may include various binder polymers. In some implementations, the binder includes at least one of polyvinylidene fluoride, vinylidene fluoride-hexafluoropropylene copolymer, polyamide, polyacrylonitrile, polyacrylate, polyacrylic acid, polyacrylate, sodium carboxymethyl cellulose, polyvinylpyrrolidone, polyvinyl ether, polymethyl methacrylate, polytetrafluoroethylene, polyhexafluoropropylene, or styrene-butadiene rubber.

According to some implementations of this application, the negative active layer further includes a conductive material to improve the electrode conductivity. Any conductive material may be used as this conductive material as long as it does not cause a chemical change. In some implementations, the conductive material includes at least one of conductive carbon black, acetylene black, carbon nanotubes, Ketjen black, conductive graphite, or graphene.

According to some implementations of this application, the negative electrode plate is a lithium metal or lithium-containing alloy. In some embodiments, the negative electrode plate is a lithium sheet.

According to some implementations of this application, a charge cut-off voltage of the electrochemical device is greater than or equal to 4.6 V.

The electrochemical device of this application further includes a separator, and there is no particular limitation on the material and shape of the separator used in the electrochemical device of this application, which may be of any technique disclosed in the prior art. In some embodiments, the separator includes, for example, a polymer or inorganic substance formed from a material that is stable to an electrolyte solution of this application.

For example, the separator may include a substrate layer and a surface treatment layer. The substrate layer is a non-woven fabric, a film or a composite film with a porous structure, and a material of the substrate layer is selected from at least one of polyethylene, polypropylene, polyethylene terephthalate and polyimide. Specifically, a polypropylene porous film, a polyethylene porous film, a polypropylene non-woven fabric, a polyethylene non-woven fabric or a polypropylene-polyethylene-polypropylene porous composite film may be used.

The surface treatment layer is disposed on at least one surface of the substrate layer, the surface treatment layer may be a polymer layer or an inorganic substance layer and may also be a mixed layer formed by a polymer and an inorganic substance.

The inorganic substance layer includes inorganic particles and a binder. The inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alcoxyl, polymethyl methacrylate, polytetrafluoroethylene and polyhexafluoropropylene.

The polymer layer includes a polymer, and a material of the polymer is selected from at least one of polyamide, polyacrylonitrile, acrylate polymer, polyacrylic acid, polyacrylate, polyvinylpyrrolidone, polyvinyl alcoxyl, polyvinylidene fluoride, and poly(vinylidene fluoride-hexafluoropropylene).

The electrochemical device of this application further includes an electrolyte solution. The electrolyte solution used in this application may be an electrolyte solution known in the prior art.

In some implementations, the electrolyte solution includes an organic solvent, a lithium salt, and an optional additive. The organic solvent of the electrolyte solution according to this application may be any organic solvent known in the prior art that can be used as a solvent for the electrolyte solution. An electrolyte used in the electrolyte solution according to this application is not limited and may be any electrolyte known in the prior art. The additive of the electrolyte solution according to this application may be any additive known in the prior art that may be used as an additive for the electrolyte solution. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent including, for example, at least one of 1,3-dioxolane (DOL) and dimethoxyethane (DME). In some embodiments, the lithium salt includes at least one of an organic lithium salt or an inorganic lithium salt. In some embodiments, the lithium salt includes, but is not limited to: lithium hexafluorophosphate (LiPF₆), lithium tetrafluoroborate (LiBF₄), lithium difluorophosphate (LiPO₂F₂), lithium bis(trifluoromethanesulphonyl)imide LiN(CF₃SO₂)₂(LiTFSI), lithium bis(fluorosulfonyl)imide Li(N(SO₂F)₂) (LiFSI), lithium bis(oxalato)borate LiB (C₂O₄)₂(LiBOB), or lithium difluoro(oxalato) borate LiBF₂(C₂O₄)(LiDFOB).

In some embodiments, the electrochemical device of this application includes, but is not limited to: all kinds of primary batteries, secondary batteries and capacitors. In some embodiments, the electrochemical device is a lithium secondary battery. In some embodiments, the lithium secondary battery includes, but is not limited to: a lithium metal secondary battery, a lithium ion secondary battery, a lithium polymer secondary battery, and a lithium ion polymer secondary battery.

### IV. Electronic device

This application further provides an electronic device, including the electrochemical device in the third aspect of this application.

Electronic equipment or device of this application is not specifically limited. In some embodiments, the electrochemical equipment of this application includes, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, etc.

Reagents, materials, and apparatuses used in the following embodiments and comparative embodiments can be obtained commercially unless otherwise stated.

### Embodiment 1

### (1) Preparing a sodium-containing cobalt oxide

Cobalt sulfate (CoSO₄), manganese sulfate (MnSO₄) and nickel sulfate (NiSO₄) are weighed by calculating a mass according to a molar ratio of 94:5:1, then deionized water is added to rapidly stir for dissolving, and then adding ammonium carbonate, a pH is adjusted to 8 until the reaction is completely carried out to form a homogeneous carbonate precipitate, the precipitate is sintered at 650 °C for 12 h, and an Ni and Mn doped Co₃O₄ metal oxide material is obtained after processes such as crushing and sieving treatment.

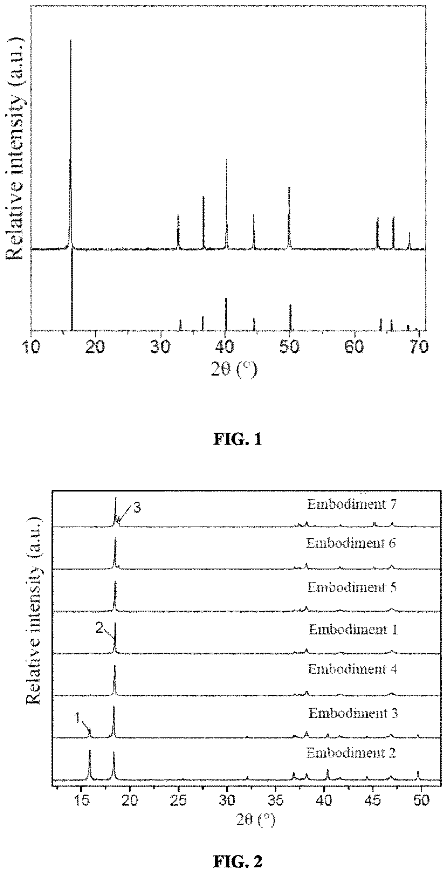

Sodium carbonate (Na₂CO₃) and the above metal oxide are weighed and uniformly mixed according to a molar ratio of 0.35:1, a temperature is kept at 800 °C for 48 h, and a corresponding sodium-containing cobalt oxide material is obtained after post-processing. As shown in FIG. 1, an XRD test result indicates that the obtained sodium-containing cobalt oxide is of a P6₃/mmc structure.

### (2) Preparing a lithium-containing cobalt oxide

The above sodium-containing cobalt oxide material, lithium nitrate and lithium acetate are uniformly mixed according to a molar ratio of 1:2:3, loaded into a corundum crucible, and subjected to a solid-phase reaction at 250 °C for 6 h, and then cooled to obtain a mixture of the lithium-containing cobalt oxide.

The above mixture material is crushed and then washed by deionized water several times to remove soluble sodium and lithium salts until a conductivity of a supernatant is less than 200 µS/cm, and then steps of suction filtration, drying, sieving and the like are carried out on residual powder to finally obtain a target lithium-containing cobalt oxide material, where the obtained lithium-containing cobalt oxide material has a median particle size Dv50 of about 14 µm. As shown in FIG. 2, an XRD test result indicates that the obtained lithium-containing cobalt oxide is of a P6₃mc structure.

### (3) Manufacturing a button cell

The above obtained lithium-containing cobalt oxide as a positive electrode active material, conductive carbon (SP) as a conductive agent and polyvinylidene fluoride (PVDF) as a binder are mixed according to a mass ratio of 90:5:5, N-methyl-2-pyrrolidone (NMP) as a solvent is added to make a slurry, and the slurry is coated on aluminum foil with a thickness of 12 µm. Then, drying is carried out in a blast drying oven at 90 °C for 4 h, and baking is carried out in a vacuum drying oven at 110 °C for 24 h. Processes of cold pressing, punching, weighing and the like are carried out on an electrode plate sufficiently dried, to obtain a positive electrode.

Under an inert atmosphere, the above positive electrode, a separator, a negative electrode and an electrolyte solution are assembled into a button half cell. The negative electrode is a lithium metal; and the electrolyte solution is: EC and DMC with a volume ratio of 1:1, and 1 M/L LiPF₆.

### Embodiment 2 to Embodiment 7

The material preparation steps are the same as those in Embodiment 1 except that the solid-phase reaction temperature is adjusted for the preparation of the lithium-containing cobalt oxide in (2). The solid-phase reaction temperatures of Embodiment 2 to Embodiment 7 are 200 °C, 220 °C, 240 °C, 260 °C, 280 °C, and 300 °C, respectively. Elemental compositions of lithium-containing cobalt oxides in Embodiment 2 to Embodiment 7 are shown in Table 1.

### Embodiment 8 to Embodiment 20

The material preparation steps are the same as those in Embodiment 1 except that elemental compositions of sodium-containing cobalt oxides used are adjusted. Elemental compositions of lithium-containing cobalt oxides in Embodiment 8 to Embodiment 20 are shown in Table 2 and Table 3.

### Embodiment 21 to Embodiment 28

The material preparation steps are the same as those in Embodiment 1 except that elemental compositions of sodium-containing cobalt oxides used are adjusted. An aluminum element in a lithium cobalt oxide containing the aluminum element is added to deionized water in the form of aluminum nitrate along with cobalt sulfate, manganese sulfate and nickel sulfate. Elemental compositions of lithium-containing cobalt oxides in Embodiment 21 to Embodiment 28 are shown in Table 4.

### Embodiment 29 to Embodiment 39

The material preparation steps are the same as those in Embodiment 1 except that elemental compositions of sodium-containing cobalt oxides used are adjusted. A titanium element in a lithium cobalt oxide containing the titanium element is introduced in the form of titanium dioxide at the solid-phase sintering stage of a sodium cobalt oxide. It is worth noting that the introduction of the titanium element is not limited to titanium dioxide, and may also be other titanium-containing compounds such as titanium sulfate, and titanium nitrate, and the introduction stage is not limited to the solid-phase sintering stage of the sodium cobalt oxide, and may also be the preparation stage of an oxide precursor. Elemental compositions of lithium-containing cobalt oxides in Examples 29 to 39 are shown in Table 5.

### Embodiment 40 to Embodiment 44

The material preparation steps are the same as those in Embodiment 1 except that elemental compositions of sodium-containing cobalt oxides used are adjusted. A fluorine element in a lithium cobalt oxide containing the fluorine element is introduced in the form of cobalt fluoride at the solid-phase sintering stage of a sodium cobalt oxide. Elemental compositions of lithium-containing cobalt oxides in Embodiment 40 to Embodiment 44 are shown in Table 6.

### Comparative Embodiment 1

Weigh 0.5 mol cobalt sulfate (CoSO₄) raw materials, add deionized water to rapidly stir for dissolving, and then add ammonium carbonate, adjust a pH to 8 until the reaction is completely carried out to form a homogeneous cobalt carbonate precipitate, sinter the precipitate at 650 °C for 12 h, and obtain a pure Co₃O₄ metal oxide material after processes such as crushing and sieving treatment.

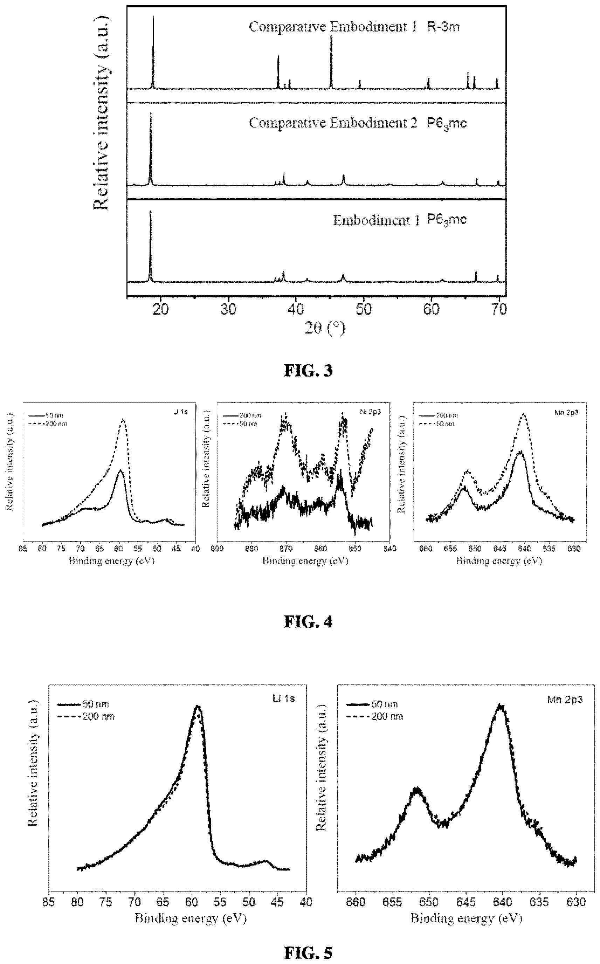

Weigh lithium carbonate (Li₂CO₃) and the above metal oxide according to a molar ratio of 1.05:1 and uniformly mix the same, keep a temperature at 900 °C for 12 h, and obtain a corresponding lithium-containing cobalt oxide material after post-processing. As shown in FIG. 3, an XRD test result indicates that the obtained lithium-containing cobalt oxide is of an R-3m structure.

### Comparative Embodiment 2 to Comparative Embodiment 4

The material preparation steps are the same as those in Embodiment 1 except that elemental compositions of sodium-containing cobalt oxides used are adjusted. Elemental compositions of lithium-containing cobalt oxides in Comparative Embodiment 2 to Comparative Embodiment 4 are shown in Table 1.

### Comparative Embodiment 5 to Comparative Embodiment 6

The material preparation steps are the same as those in Embodiment 1 except that elemental compositions of sodium-containing cobalt oxides used are adjusted. Elemental compositions of lithium-containing cobalt oxides in Comparative Embodiment 5 to Comparative Embodiment 6 are shown in Table 4.

### Comparative Embodiment 7 to Comparative Embodiment 8

The material preparation steps are the same as those in Embodiment 1 except that elemental compositions of sodium-containing cobalt oxides used are adjusted. Elemental compositions of lithium-containing cobalt oxides in Comparative Embodiment 7 to Comparative Embodiment 8 are shown in Table 5.

### Comparative Embodiment 9 to Comparative Embodiment 10

The material preparation steps are the same as those in Embodiment 1 except that elemental compositions of sodium-containing cobalt oxides used are adjusted. Elemental compositions of lithium-containing cobalt oxides in Comparative Embodiment 9 to Comparative Embodiment 10 are shown in Table 6.

### Test method

### 1. Discharge gram capacity and cycle capacity retention rate test

**A** button cell is aged at a constant temperature (25 °C) for 24 h and then tested by repeated charging and discharging for 20 times in the voltage range of 3 V to x (x values may be 4.6 V, 4.7 V, or 4.8 V, vs.Li/Li⁺) with a current density of 0.3 mA/cm².

The 2nd discharge gram capacity is used as a reference benchmark for cycle gram capacity decay, i.e., nth capacity retention rate = nth discharge capacity/2nd discharge capacity × 100%; and

a discharge medium voltage is a cell voltage corresponding to discharge to 50% capacity.

### 2. High-temperature floating charge performance test

After the button cell is aged at a constant temperature (45 °C) for 24 h, the button cell is charged to a voltage of 4.6 V at a current density of 0.3 mA/cm² with a constant current, and then keeps constant voltage charging at 4.6 V to obtain a change curve of a constant voltage charging current along with time. In general, the constant voltage charging current decreases and then increases (warps) with extension of constant voltage charging time. The current warping time is the time when the current reaches the minimum value and then starts to become large during constant voltage charging, and the length of this time reflects the structural stability of a positive electrode active material of the cell to a certain extent. Generally, the longer the current warping time is, the better the structural stability of the positive electrode active material is, and vice versa.

### 3. XRD test

An X-ray powder diffractometer (XRD, model: Bruker D8 ADVANCE) is used to test a positive electrode material, and a target material is Cu Kα. The voltage and current are 40 KV/35 mA, the scanning angle range is from 10° to 60°, and the scanning rate is 5 °/min.

### 4. Positive electrode active material elemental composition test

The elemental composition of the positive electrode material is tested, where contents of elements such as Li and transition metals are measured by Optima 7000DV inductively coupled plasma (ICP) spectrometry tester of PerkinElmer Company of the U.S.A., and the content of an F element is measured by a ThermoFisher ion chromatography tester. Before testing the content of the F element, it is necessary to dissolve the to-be-tested positive electrode material with a certain amount of dilute nitric acid solution, to completely form an aqueous solution of F, and then testing is carried out.

### 5. XPS test

The experiments are carried out using a multifunctional X-ray photoelectron spectroscopy test instrument (XPS, model: ThermoFisher/ESCALAB Xi+) on the surface of positive electrode active materials with different profiling depths.

### Test result

Table 1 illustrates an effect of a solid-phase reaction temperature on the structure of a lithium-containing cobalt oxide material. Table 2 illustrates an effect of doping of Mn element and/or Ni element on the performance of a lithium-containing cobalt oxide material and a lithium-ion battery containing the lithium-containing cobalt oxide material.

Where, A% denotes a content of Mn element in a lithium-containing cobalt oxide on the basis that the total molar content of Co element, Mn element, and Ni element is 100%; and B% denotes a content of Ni element in a lithium-containing cobalt oxide on the basis that the total molar content of Co element, Mn element, and Ni element is 100%. The solid-phase reaction temperature of Embodiment 8 to Embodiment 11 is 250 °C.

**Table 1**

| Embodiment and Comparative Embodiment | Elemental composition | Solid-phase reaction temperature | Phase composition | A | B | A+B | A/B |
|---|---|---|---|---|---|---|---|
| Embodiment 1 | Li_{0.901}Co_{0.942}Mn_{0.039}Ni_{0.019}O₂ | 250 °C | P6₃mc | 3.9 | 1.9 | 5.8 | 2.05 |
| Embodiment 2 | Li_{0.913}Co_{0.938}Mn_{0.039}Ni_{0.022}O₂ | 200 °C | P6₃mmc+P6₃mc | 3.9 | 2.2 | 6.1 | 1.77 |
| Embodiment 3 | Li_{0.922}Co_{0.940}Mn_{0.039}Ni_{0.022}O₂ | 220 °C | Little P6₃mmc+P6₃mc | 3.9 | 2.2 | 6.1 | 1.77 |
| Embodiment 4 | Li_{0.924}Co_{0.938}Mn_{0.039}Ni_{0.023}O₂ | 240 °C | P6₃mc | 3.9 | 2.3 | 6.2 | 1.70 |
| Embodiment 5 | Li_{0.919}Co_{0.942}Mn_{0.041}Ni_{0.017}O₂ | 260 °C | P6₃mc | 4.1 | 1.7 | 5.8 | 2.41 |
| Embodiment 6 | Li_{0.908}Co_{0.941}Mn_{0.041}Ni_{0.018}O₂ | 280 °C | P6₃mc+Little R-3m | 4.1 | 1.8 | 5.9 | 2.28 |
| Embodiment 7 | Li_{0.912}Co_{0.938}Mn_{0.040}Ni_{0.022}O₂ | 300 °C | P6₃mc+R-3m | 4 | 2.2 | 6.2 | 1.82 |
| Comparative Embodiment 1 | Li_{0.998}CoO₂ | 250 °C | R-3m | 0 | 0 | 0 | / |
| Comparative Embodiment 2 | Li_{0.907}CoO₂ | 250 °C | P6₃mc | 0 | 0 | 0 | / |
| Comparative Embodiment 3 | Li_{0.906}Co_{0.941}Mn_{0.059}O₂ | 250 °C | P6₃mc | 5.9 | 0 | 5.9 | / |
| Comparative Embodiment 4 | Li_{0.919}Co_{0.942}Ni_{0.058}O₂ | 250 °C | P6₃mc | 0 | 5.8 | 5.8 | 0 |

**Table 2**

| Embodiment and Comparative Embodiment | Elemental composition | Phase composition | A | B | A+B | A/B | Current warping time h | 3-4.6 V first discharge gram capacity mAh/g | 20-cycle retention rate % |
|---|---|---|---|---|---|---|---|---|---|
| Comparative Embodiment 1 | Li_{0.998}CoO₂ | R-3m | 0 | 0 | 0 | / | 130 | 210 | 60.3 |
| Comparative Embodiment 2 | Li_{0.907}CoO₂ | P6₃mc | 0 | 0 | 0 | / | 137 | 218 | 65.1 |
| Comparative Embodiment 3 | Li_{0.906}Co_{0.941}Mn_{0.059}O₂ | P6₃mc | 5.9 | 0 | 5.9 | / | 208 | 232 | 68.5 |
| Comparative Embodiment 4 | Li_{0.919}CO_{0.942}Ni_{0.058}O₂ | P6₃mc | 0 | 5.8 | 5.8 | 0 | 192 | 237 | 67.0 |
| Embodiment 1 | Li_{0.901}Co_{0.942}Mn_{0.039}Ni_{0.019}O₂ | P6₃mc | 3.9 | 1.9 | 5.8 | 2.05 | 503 | 235 | 86.3 |
| Embodiment 8 | Li_{0.908}Co_{0.939}Mn_{0.05}Ni_{0.011}O₂ | P6₃mc | 5 | 1.1 | 6.1 | 4.55 | 472 | 236 | 85.2 |
| Embodiment 9 | Li_{0.911}Co_{0.938}Mn_{0.031}Ni_{0.031}O₂ | P6₃mc | 3.1 | 3.1 | 6.2 | 1.00 | 451 | 236 | 84.1 |
| Embodiment 10 | Li_{0.915}Co_{0.941}Mn_{0.019}Ni_{0.041}O₂ | P6₃mc | 1.9 | 4.1 | 6 | 0.46 | 487 | 238 | 85.7 |
| Embodiment 11 | Li_{0.918}Co_{0.938}Mn_{0.011}Ni_{0.051}O₂ | P6₃mc | 1.1 | 5.1 | 6.2 | 0.22 | 433 | 238 | 80.2 |

FIG. 2 gives an XRD analysis result of the lithium-containing cobalt oxide materials of Embodiment 1 to Embodiment 7. As can be seen from FIG. 2, the solid-phase reaction temperature has a large effect on the phase of the lithium-containing cobalt oxide materials. When the solid-phase reaction temperature is less than 240 °C, obvious sodium cobalt oxide residues (main peak labeled "1") of the P6₃mmc structure can be seen in the obtained lithium-containing cobalt oxide materials, indicating that the reaction is not completely carried out. When the solid-phase reaction temperature is increased to 240 °C to 260 °C, the obtained lithium-containing cobalt oxide material all basically has lithium cobalt oxide pure phases (main peak labeled "2") of the P6₃mc structure. When the solid-phase reaction temperature is further increased to 280 °C and above, new lithium cobalt oxide heterogeneous phases (main peak labeled "3") of the R-3m structure begin to appear.

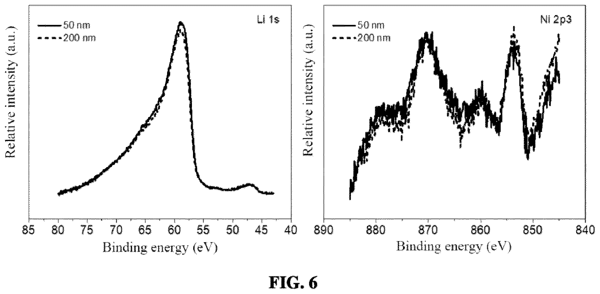

FIG. 4, FIG. 5, and FIG. 6 provide XPS test results for different deep-section thicknesses of the lithium-containing cobalt oxide materials in Embodiment 1, Comparative Embodiment 3, and Comparative Embodiment 4, respectively. For the lithium-containing cobalt oxide material in Embodiment 1, an intensity of the strongest characteristic peaks of Co, Mn, and Ni of deep sectioning 50 nm from a surface layer to an inner layer is significantly higher than that of deep sectioning 200 nm, while an intensity of the strongest characteristic peak of Li is lower than that of deep sectioning 200 nm. With respect to the sum of mole numbers of Ni, Co, and Mn, the n_{Li} of the surface layer is about 0.3, and the n_{Li} of the inner layer is about 0.92, which indicates that the surface layer of the lithium-containing cobalt oxide material in Embodiment 1 is more lithium-deficient compared to the inner layer. In contrast, the lithium-containing cobalt oxide materials in Comparative Embodiment 3 and Comparative Embodiment 4 have very similar intensities of the strongest characteristic peaks at positions 50 nm and 200 nm from the surface layer, whether Li 1s, Ni 2p or Mn 2p. With respect to the sum of mole numbers of Ni, Co, and Mn, the n_{Li} of the surface layer and the n_{Li} of the inner layer are close to 1, with no obvious difference, which indicates that the metal elements of the surface layer and the inner layer of the lithium-containing cobalt oxide materials in Comparative Embodiment 3 and Comparative Embodiment 4 are uniformly distributed.

From Table 2, it can be seen that the floating charge current warping time of the lithium-containing cobalt oxide material without Mn and Ni doped is the shortest, about 150 h, indicating that the stability of the material at this time is the worst. After the lithium-containing cobalt oxide material is doped with Mn or Ni, the floating charge current warping time is increased, about 200 h, indicating that the structural stability of the lithium-containing cobalt oxide material is improved. When the lithium-containing cobalt oxide material is co-doped with Mn and Ni according to a certain proportion, the floating charge current warping time is increased greatly, more than 400 h, indicating that the co-doping of Ni and Mn greatly improves the structural stability of the lithium-containing cobalt oxide material.

Further, the lithium-containing cobalt oxide material in Embodiment 1 exhibits a better high-temperature floating charge performance compared to the lithium-containing cobalt oxide materials in Comparative Embodiment 3 and Comparative Embodiment 4. It is supposed that in addition to the ability of Mn and Ni doping to improve the structural stability of the lithium-containing cobalt oxide material, the enhancement of the high-temperature floating charge performance may be related to the distribution of the elements therein. For the lithium-containing cobalt oxide material in Embodiment 1, the deep-section XPS test result means that the surface layer is more lithium-deficient compared to the inner layer, and the lithium-containing cobalt oxide in the lithium-deficient state has a higher conductivity than that in the lithium-full state, which is favorable to the electrical performance. Further, the lithium-containing cobalt oxide material of the P6₃mc structure will have a certain concentration of lithium vacancies, while the reduction of lithium vacancies causes instability and is prone to a phase structure transformation to R-3m. Therefore, the elemental gradient distribution in the surface layer of the lithium-containing cobalt oxide material in Embodiment 1 is highly likely to further strengthen the overall structural stability of the material.

Table 3 illustrates an effect of a doping content of Mn element and/or Ni element on the performance of a lithium-containing cobalt oxide material and a lithium-ion battery containing the lithium-containing cobalt oxide material.

Where, A% denotes a content of Mn element in a lithium-containing cobalt oxide on the basis that the total molar content of Co element, Mn element, and Ni element is 100%; and B% denotes a content of Ni element in a lithium-containing cobalt oxide on the basis that the total molar content of Co element, Mn element, and Ni element is 100%. The solid-phase reaction temperature of Embodiment 12 to Embodiment 20 is 250 °C.

**Table 3**

| Embodiment and Comparative Embodiment | Elemental composition | Phase composition | A | B | A+B | A/B | 3-4.6 V first discharge gram capacity mAh/g | Discharge medium voltage V | 20-cycle retention rate % |
|---|---|---|---|---|---|---|---|---|---|
| Comparative Embodiment 1 | Li_{0.998}CoO₂ | R-3m | 0 | 0 | 0 | / | 210 | 4.03 | 60.3 |
| Comparative Embodiment 2 | Li_{0.907}CoO₂ | P6₃mc | 0 | 0 | 0 | / | 218 | 4.02 | 65.1 |
| Embodiment 8 | Li_{0.908}Co_{0.939}Mn_{0.05}Ni_{0.011}O₂ | P6₃mc | 5 | 1.1 | 6.1 | 4.55 | 236 | 4.04 | 85.2 |
| Embodiment 12 | Li_{0.906}Co_{0.930}Mn_{0.063}Ni_{0.007}O₂ | P6₃mc | 6.3 | 0.7 | 7.0 | 9.0 | 233.4 | 4.03 | 80.1 |
| Embodiment 13 | Li_{0.905}Co_{0.991}Mn_{0.006}Ni_{0.003}O₂ | P6₃mc + Little R-3m | 0.6 | 0.3 | 0.9 | 2.00 | 238 | 4.05 | 70.7 |
| Embodiment 14 | Li_{0.908}Co_{0.978}Mn_{0.015}Ni_{0.007}O₂ | P6₃mc + Little R-3m | 1.5 | 0.7 | 2.2 | 2.14 | 240 | 4.04 | 76.2 |
| Embodiment 15 | Li_{0.907}Co_{0.969}Mn_{0.02}Ni_{0.011}O₂ | P6₃mc | 2.00 | 1.10 | 3.10 | 1.82 | 238 | 4.04 | 82.3 |
| Embodiment 16 | Li_{0.904}Co_{0.903}Mn_{0.066}Ni_{0.031}O₂ | P6₃mc | 6.60 | 3.10 | 9.70 | 2.13 | 232 | 4.03 | 85.5 |
| Embodiment 17 | Li_{0.91}Co_{0.883}Mn_{0.08}Ni_{0.037}O₂ | P6₃mc | 8.00 | 3.70 | 11.70 | 2.16 | 225 | 4.03 | 83.3 |
| Embodiment 18 | Li_{0.922}Co_{0.85}Mn_{0.102}Ni_{0.048}O₂ | P6₃mc | 10.20 | 4.80 | 15.00 | 2.13 | 222 | 4.02 | 82.2 |
| Embodiment 19 | Li_{0.919}Co_{0.821}Mn_{0.109}Ni_{0.07}O₂ | P6₃mc | 10.90 | 7.00 | 17.90 | 1.56 | 213 | 3.95 | 81.7 |
| Embodiment 20 | Li_{0.906}Co_{0.801}Mn_{0.107}Ni_{0.092}O₂ | P6₃mc | 10.70 | 9.20 | 19.90 | 1.16 | 207 | 3.90 | 81.1 |

As can be seen in Table 3, with the increase of the total amount of Mn and Ni, the first discharge gram capacity and discharge medium voltage of the Lithium-containing cobalt oxide material show a decreasing trend when charging to 4.6 V. This is mainly due to the fact that Mn⁴⁺ is relatively inert and difficult to contribute to the gram capacity by valorization, and although Ni²⁺/Ni³⁺ redox can contribute to a part of the gram capacity, the lower redox potential thereof will lead to the decrease of the discharge medium voltage.

It can also be seen by comparing Embodiment 12 to Embodiment 20 with Comparative Embodiment 1 and Comparative Embodiment 2, that although the capacity retention rate of the lithium-containing cobalt oxide material after 20 cycles at 3-4.6 V shows an increase and then a decrease with the increase of the total doping amount of Mn and Ni when Mn and Ni are co-doped, the cycle retention rates of Embodiment 12 to Embodiment 20 are much higher than those of Comparative Embodiment 1 and Comparative Embodiment 2. This indicates that the co-doping of Mn and Ni is conducive to enhancing the structural stability of the lithium-containing cobalt oxide material, which in turn improves the cycle stability of lithium-ion batteries at a high voltage. Meanwhile, when the Co content is greater than or equal to 90%, for example, the material in Embodiment 8 and the material in Embodiment 16 have both high discharge gram capacity and cycle stability.

Table 4 illustrates an effect of doping of Al element on the performance of a lithium-containing cobalt oxide material and a lithium-ion battery containing the lithium-containing cobalt oxide material.

Where, A% denotes a content of Mn element in a lithium-containing cobalt oxide on the basis that the total molar content of Co element, Mn element, Ni element and Al element is 100%; and B% denotes a content of Ni element in a lithium-containing cobalt oxide on the basis that the total molar content of Co element, Mn element, Ni element, and Al element is 100%.

The phase composition of the lithium-containing cobalt oxide in Comparative Embodiment 1 is R-3m. The solid-phase reaction temperature of Comparative Embodiment 2, Comparative Embodiment 5, Comparative Embodiment 6 and Embodiment 21 to Embodiment 28 is 250 °C, and the phase composition of the obtained lithium-containing cobalt oxide is P6₃mc.

**Table 4**

| Embodiment and Comparative Embodiment | Elemental composition | A | B | A+B | A/B | 3-4.6 V first discharge gram capacity mAh/g | Discharge medium voltage V | 20-cycle retention rate % |
|---|---|---|---|---|---|---|---|---|
| Comparative Embodiment 1 | Li_{0.998}CoO₂ | 0 | 0 | 0 | / | 210 | 4.03 | 60.3 |
| Comparative Embodiment 2 | Li_{0.907}CoO₂ | 0 | 0 | 0 | / | 218 | 4.02 | 65.1 |
| Comparative Embodiment 5 | Li_{0.906}Co_{0.943}Mn_{0.057}O₂ | 5.7 | 0 | 5.7 | / | 233 | 4.04 | 68.9 |
| Comparative Embodiment 6 | Li_{0.906}Co_{0.937}Ni_{0.063}O₂ | 0 | 6.3 | 6.3 | 0 | 238 | 4.01 | 71 |
| Embodiment 21 | Li_{0.923}Co_{0.955}Mn_{0.036}Ni_{0.009}O₂ | 3.6 | 0.9 | 4.5 | 4.00 | 234 | 4.03 | 86.9 |
| Embodiment 22 | Li_{0.924}Co_{0.934}Mn_{0.034}Ni_{0.025}Al_{0.007}O₂ | 3.4 | 2.5 | 5.9 | 1.36 | 235 | 4.03 | 87.4 |
| Embodiment 23 | Li_{0.915}Co_{0.926}Mn_{0.034}Ni_{0.03}Al_{0.01}O₂ | 3.4 | 3 | 6.4 | 1.13 | 235 | 4.02 | 89.4 |
| Embodiment 24 | Li_{0.918}Co_{0.928}Mn_{0.025}Ni_{0.032}Al_{0.015}O₂ | 2.5 | 3.2 | 5.7 | 0.78 | 236 | 4.03 | 92.4 |
| Embodiment 25 | Li_{0.916}Co_{0.944}Mn_{0.032}Ni_{0.008}Al_{0.016}O₂ | 3.2 | 0.8 | 4.0 | 4 | 235 | 4.03 | 90.1 |
| Embodiment 26 | Li_{0.914}Co_{0.923}Mn_{0.019}Ni_{0.043}Al_{0.015}O₂ | 1.9 | 4.3 | 6.2 | 0.44 | 237 | 4.01 | 87.9 |
| Embodiment 27 | Li_{0.917}Co_{0.922}Mn_{0.014}Ni_{0.048}Al_{0.016}O₂ | 1.4 | 4.8 | 6.2 | 0.29 | 238 | 4.01 | 87.1 |
| Embodiment 28 | Li_{0.909}Co_{0.926}Mn_{0.008}Ni_{0.049}Al_{0.017}O₂ | 0.8 | 4.9 | 5.7 | 0.16 | 239 | 4.01 | 85.2 |

As can be seen from Table 4, Comparative Embodiment 1 and Comparative Embodiment 2 are lithium cobalt oxides of the R-3m and the P6₃mc structures without any element doped, respectively, and when being charged to 4.6 V, the first discharge gram capacity is 210 mAh/g and 218 mAh/g, respectively, and the 20-cycle capacity retention rate is only about 60%. Comparative Embodiment 5 and Comparative Embodiment 6 are lithium cobalt oxide materials of the P6₃mc structures only with Mn element or Ni element doped, respectively, and when being charged to 4.6 V, the cycle stability is improved, and the 20-cycle capacity retention rate is increased to be about 70%. Embodiment 21 is a lithium-containing cobalt oxide of a P6₃mc structure co-doped with Mn and Ni according to a design proportion of 4:1, and the 20-cycle capacity retention rate is greatly increased to be 86.9%.

It can also be seen by comparing Embodiment 22 to Embodiment 28 with Embodiment 21, that the cycle stability of the lithium-containing cobalt oxide material is further enhanced by introducing Al element into the material on the basis of the co-doping of Mn element and Ni element. It is supposed that the possible mechanism is that Al is doped into the Co site, and the covalency of an Al-O bond is stronger than that of a Co-O bond, which is conducive to the improvement of the structural stability of a transition metal layer composed of a CoO6 octahedra. In addition, the doping of Al into the Co site increases the migration barrier of Co, and also serves to inhibit the dissolution of Co to a certain extent.

In addition, it can also be seen from Table 4: the cycle stability of lithium-containing cobalt oxide materials with different Mn/Ni ratios varies, and the lithium-containing cobalt oxide material in Embodiment 24 has an actually measured Mn/Ni ratio of 0.78, a higher discharge gram capacity, and the best cycle stability retention, with the 20-cycle capacity retention rate of more than 90%, which is much higher than those of Comparative Embodiment 1, Comparative Embodiment 2, Comparative Embodiment 5 and Comparative Embodiment 6.

Table 5 illustrates an effect of doping of Ti element on the performance of a lithium-containing cobalt oxide material and a lithium-ion battery containing the lithium-containing cobalt oxide material.

Where, A% denotes a content of Mn element in a lithium-containing cobalt oxide on the basis that the total molar content of Co element, Mn element, Ni element and Ti element is 100%; and B% denotes a content of Ni element in a lithium-containing cobalt oxide on the basis that the total molar content of Co element, Mn element, Ni element, and Ti element is 100%.

The phase composition of the lithium-containing cobalt oxide in Comparative Embodiment 1 is R-3m. The solid-phase reaction temperature of Comparative Embodiment 2, Comparative Embodiment 7, Comparative Embodiment 8 and Embodiment 29 to Embodiment 39 is 250 °C, and the phase composition of the obtained lithium-containing cobalt oxide is P6₃mc.

**Table 5**

| Embodiment and Comparative Embodiment | Elemental composition | A | B | A+B | A/B | 3-4.7 V first discharge gram capacity mAh/g | Discharge medium voltage V | 20-cycle retention rate % |
|---|---|---|---|---|---|---|---|---|
| Comparative Embodiment 1 | Li_{0.998}CoO₂ | 0 | 0 | 0 | / | 219 | 4.04 | 50.2 |
| Comparative Embodiment 2 | Li_{0.907}CoO₂ | 0 | 0 | 0 | 0 | 221 | 4.03 | 55.4 |
| Comparative Embodiment 7 | Li_{0.914}Co_{0.919}Mn_{0.081}O₂ | 8.1 | 0 | 8.0 | / | 235 | 4.04 | 58.9 |
| Comparative Embodiment 8 | Li_{0.916}Co_{0.921}Ni_{0.079}O₂ | 0 | 7.9 | 7.9 | 0 | 238 | 4.03 | 50.2 |
| Embodiment 29 | Li_{0.908}Co_{0.929}Mn_{0.047}Ni_{0.014}O₂ | 4.7 | 1.4 | 6.1 | 3.36 | 246 | 4.05 | 83.1 |
| Embodiment 30 | Li_{0.903}Co_{0.921}Mn_{0.048}Ni_{0.011}Ti_{0.02}O₂ | 4.8 | 1.1 | 5.9 | 4.4 | 243 | 4.05 | 85.4 |
| Embodiment 31 | Li_{0.916}Co_{0.92}Mn_{0.046}Ni_{0.013}Ti_{0.021}O₂ | 4.6 | 1.3 | 5.9 | 3.54 | 254 | 4.05 | 85.3 |
| Embodiment 32 | Li_{0.913}Co_{0.918}Mn_{0.041}Ni_{0.021}Ti_{0.02}O₂ | 4.1 | 2.1 | 6.2 | 1.95 | 248 | 4.05 | 89.7 |
| Embodiment 33 | Li_{0.908}Co_{0.92}Mn_{0.034}Ni_{0.026}Ti_{0.02}O₂ | 3.4 | 2.6 | 6 | 1.31 | 241 | 4.04 | 90.9 |
| Embodiment 34 | Li_{0.903}Co_{0.919}Mn_{0.026}Ni_{0.034}Ti_{0.021}O₂ | 2.6 | 3.4 | 6 | 0.76 | 242 | 4.05 | 89.5 |
| Embodiment 35 | Li_{0.908}Co_{0.924}Mn_{0.021}Ni_{0.043}Ti_{0.012}O₂ | 2.1 | 4.3 | 6.4 | 0.49 | 240 | 4.05 | 85.6 |
| Embodiment 36 | Li_{0.91}Co_{0.919}Mn_{0.014}Ni_{0.047}Ti_{0.02}O₂ | 1.4 | 4.7 | 6.1 | 0.30 | 255 | 4.05 | 84.8 |
| Embodiment 37 | Li_{0.903}Co_{0.934}Mn_{0.047}Ni_{0.014}Ti_{0.005}O₂ | 4.7 | 1.4 | 6.1 | 3.36 | 249 | 4.05 | 85.8 |
| Embodiment 38 | Li_{0.903}Co_{0.924}Mn_{0.047}Ni_{0.014}Ti_{0.015}O₂ | 4.7 | 1.4 | 6.1 | 3.36 | 247 | 4.04 | 86.2 |
| Embodiment 39 | Li_{0.903}Co_{0.912}Mn_{0.047}Ni_{0.014}Ti_{0.027}O₂ | 4.7 | 1.4 | 6.1 | 3.36 | 245 | 4.04 | 87.1 |

As can be seen from Table 5, with the charging up to voltage increased to 4.7 V, the first discharge gram capacity and discharge medium voltage of all lithium-containing cobalt oxide materials are greatly increased compared to 4.6 V, which means that lithium-ion batteries at a high voltage have higher energy density. However, the cycle stability of all the lithium-ion batteries is decreased to different degrees, Comparative Embodiment 1 and Comparative Embodiment 2 are lithium cobalt oxides of the R-3m and the P6₃mc structures without any element doped, respectively, and the 20-cycle capacity retention rate is only about 50%. Comparative Embodiment 7 and Comparative Embodiment 8 are a lithium-containing cobalt oxide material only doped with Mn element and a lithium-containing cobalt oxide material only doped with Ni element respectively, which are similar to the undoped lithium cobalt oxides, and also have the cycle retention rate of about 50%. However, after the lithium-containing cobalt oxides are co-doped with Mn element and Ni element, the 20-cycle capacity retention rate is increased by more than 30% compared with Comparative Embodiment 1, Comparative Embodiment 2, Comparative Embodiment 7 and Comparative Embodiment 8.

It can also be seen by comparing Embodiment 30 to Embodiment 39 with Embodiment 29, that the cycle retention rate of the lithium-containing cobalt oxide material can be further increased by additionally introducing the Ti element. By comparing Embodiment 30 to Embodiment 39, it can also be seen that the ratio of the Mn element to the Ni element has a greater effect on the cycle stability. Overall, the lithium-containing cobalt oxide material has a better cycle retention rate when the value of A/B is between 0.2 and 5. Where, the values of A/B in the lithium-containing cobalt oxide materials in Embodiment 32 and Embodiment 34 are 1.95 and 0.76, respectively, and the capacity retention rate is even more than 89% when cycling for 20 cycles in the voltage interval of 3 V to 4.7 V.

Table 6 illustrates an effect of doping of fluorine (F) element on the performance of a lithium-containing cobalt oxide material and a lithium-ion battery containing the lithium-containing cobalt oxide material.

Where, A% denotes a content of Mn element in a lithium-containing cobalt oxide on the basis that the total molar content of Co element, Mn element and Ni element is 100%; and B% denotes a content of Ni element in a lithium-containing cobalt oxide on the basis that the total molar content of Co element, Mn element and Ni element is 100%.

The phase composition of the lithium-containing cobalt oxide in Comparative Embodiment 1 is R-3m. The solid-phase reaction temperature of Comparative Embodiment 2, Comparative Embodiment 9, Comparative Embodiment 10 and Embodiment 40 to Embodiment 44 is 250 °C, and the phase composition of the obtained lithium-containing cobalt oxide is P6₃mc.

**Table 6**

| Embodiment and Comparative Embodiment | Elemental composition | A | B | A+B | A/B | 3-4.8 V first discharge gram capacity mAh/g | Discharge medium voltage V | 20-cycle retention rate % |
|---|---|---|---|---|---|---|---|---|
| Comparative Embodiment 1 | Li_{0.998}CoO₂ | 0 | 0 | 0 | / | 228 | 4.1 | 0 |
| Comparative Embodiment 2 | Li_{0.907}CoO₂ | 0 | 0 | 0 | / | 237 | 4.08 | 0 |
| Comparative Embodiment 9 | Li_{0.925}Co_{0.906}Mn_{0.094}O₂ | 9.4 | 0 | 9.4 | / | 231 | 4.09 | 45.3 |
| Comparative Embodiment 10 | Li_{0.91}Co_{0.906}Ni_{0.094}O₂ | 0 | 9.4 | 9.4 | 0 | 240 | 4.05 | 38.2 |
| Embodiment 40 | Li_{0.919}Co_{0.898}Mn_{0.047}Ni_{0.047}O₂ | 4.7 | 4.7 | 9.4 | 1.00 | 259 | 4.09 | 80.9 |
| Embodiment 41 | Li_{0.919}Co_{0.9}Mn_{0.047}Ni_{0.047}O_{1.991}F_{0.009} | 4.7 | 4.7 | 9.4 | 1.00 | 262 | 4.06 | 81.9 |
| Embodiment 42 | Li_{0.901}Co_{0.902}Mn_{0.047}Ni_{0.047}O_{1.98}F_{0.02} | 4.7 | 4.7 | 9.4 | 1.00 | 260 | 4.05 | 82.7 |
| Embodiment 43 | Li_{0.923}Co_{0.903}Mn_{0.05}Ni_{0.047}O_{1.969}F_{0.031} | 5 | 4.7 | 9.7 | 1.06 | 255 | 4.05 | 82.6 |
| Embodiment 44 | Li_{0.917}Co_{0.901}Mn_{0.051}Ni_{0.048}O_{1.958}F_{0.042} | 5.1 | 4.8 | 9.9 | 1.06 | 240 | 4.06 | 83.4 |

As can be seen from Table 6, with the charging cut-off voltage further increased to 4.8 V, the first discharge medium voltage of all lithium-containing cobalt oxide materials is increased to be more than 4.05 V, but the discharge gram capacity is not obviously increased compared to that of the charging cut-off voltage of 4.7 V. In addition, as the charging cut-off voltage increases to 4.8 V, the cycle stability of the lithium-containing cobalt oxide materials without any element doped and the lithium-containing cobalt oxide materials doped with Mn element or Ni element alone is decreased significantly. In Comparative Embodiment 1 and Comparative Embodiment 2, diving occurs directly after 20 cycles, and the capacity decreases to zero. In Comparative Embodiment 9 and Comparative Embodiment 10, the cycle performance is improved, but the capacity retention rate is only about 40% after 20 cycles. However, the lithium-containing cobalt oxide material with Mn and Ni co-doped still maintains better cycle stability, and the 20-cycle capacity retention rate is more than 80%. Further, by additionally introducing the non-metallic F element into the lithium-containing cobalt oxide material, the 20-cycle capacity retention rate can be further increased by 2% to 3%. However, the first discharge gram capacity of the lithium-containing cobalt oxide material can be decreased when the doping amount of the F element is too high. The possible mechanism of F element doping to improve the cycle stability is as follows: the electronegativity of the F element is larger than that of oxygen (O) element, an O energy band can be pulled down, the overlapping of energy bands of O and Co in the high-delithiation state is reduced, release of oxygen due to the oxidization of O²⁻ is avoided, and thus the structural stability of the material is enhanced.

Although the illustrative embodiments have been demonstrated and described, a person skilled in the art should understand that the above embodiments are not to be construed as a limitation of this application, and embodiments may be altered, substituted, and modified without departing from the spirit, principles, and scope of this application.

## Claims

1. A positive electrode active material, comprising lithium-containing cobalt oxide particles, wherein the lithium-containing cobalt oxide particles comprise an Mn element and an Ni element, and on a basis that a molar content of metal elements except a lithium element in the lithium-containing cobalt oxide particles is 100%, a molar content of the Mn element is A°lo, and a molar content of the Ni element is B%, wherein 0.1 ≤ A + B < 20, and 0.2 ≤ A/B ≤ 9.

2. The positive electrode active material according to claim 1, wherein the positive electrode active material comprises the lithium-containing cobalt oxide particles with a P6₃mc structure.

3. The positive electrode active material according to claim 1, wherein 0.05 ≤ A < 11, and/or 0.05 ≤ B < 10.

4. The positive electrode active material according to claim 1, wherein 0.1 ≤ A + B < 10, and 0.2 ≤ A/B ≤ 5.

5. The positive electrode active material according to claim 1, wherein the lithium-containing cobalt oxide particles comprise a first region and a second region, a molar content of Mn element in the first region is greater than a molar content of Mn element in the second region,
the first region is a region of 100 nm in a direction from a surface of the lithium-containing cobalt oxide particles to a center of the lithium-containing cobalt oxide particles, and the second region is a region other than the first region.

6. The positive electrode active material according to claim 5, wherein the positive electrode active material satisfies at least one of conditions (a) to (e):
(a) on the basis that the molar content of the metal elements except the lithium element in the lithium-containing cobalt oxide particles is 100%, the content A₁% of the Mn element in the first region and the content A₂% of the Mn element in the second region satisfy: 1 < A₁/A₂ < 5;
(b) a molar content of Ni element in the first region is greater than a molar content of Ni element in the second region;
(c) on the basis that the molar content of the metal elements except the lithium element in the lithium-containing cobalt oxide particles is 100%, the molar content B₁% of the Ni element in the first region and the molar content B₂% of the Ni element in the second region satisfy 1 < B₁/B₂ < 5;
(d) a molar content of Li element in the first region is less than a molar content of Li element in the second region; or
(e) on the basis that the molar content of the metal elements except the lithium element in the lithium-containing cobalt oxide particles is 100%, the molar content C₁% of the Li element in the first region and the molar content C₂% of the Li element in the second region satisfy 0.5 < C₁/C₂ < 1.

7. The positive electrode active material according to claim 5, wherein the positive electrode active material satisfies at least one of conditions (f) to (h):
(f) an intensity of the strongest characteristic peak of Mn 2p in the first region is greater than an intensity of the strongest characteristic peak of Mn 2p in the second region in an XPS spectrum of the positive electrode active material;
(g) an intensity of the strongest characteristic peak of Ni 2p in the first region is greater than an intensity of the strongest characteristic peak of Ni 2p in the second region in the XPS spectrum of the positive electrode active material; or
(h) an intensity of the strongest characteristic peak of Li 1s in the first region is less than an intensity of the strongest characteristic peak of Li 1s in the second region in the XPS spectrum of the positive electrode active material.

8. The positive electrode active material according to claim 1, further comprising an M element and/or a Z element, wherein the M element comprises at least one of aluminum, magnesium, titanium, ferrum, zinc, copper, niobium, chromium, zirconium, or sodium, and the Z element comprises at least one of boron, fluorine, phosphorus, sulfur, nitrogen, or silicon.

9. The positive electrode active material according to claim 1, wherein a median particle size Dv50 of the lithium-containing cobalt oxide particles satisfies 3 µm ≤ Dv50 ≤ 30 µm.

10. The positive electrode active material according to claim 1, wherein a preparation method for the positive electrode active material comprises subjecting a sodium-containing cobalt oxide and a lithium-containing compound to a solid-phase reaction, a solid-phase reaction temperature is from 180 °C to 320 °C, and solid-phase reaction time is from 3 h to 12 h.

11. The positive electrode active material according to claim 1, wherein a charge gram capacity and a discharge gram capacity of the positive electrode active material are both greater than or equal to 210 mAh/g.

12. An electrochemical device, comprising a positive electrode plate and a negative electrode plate, wherein the positive electrode plate comprises a positive current collector and a positive active layer disposed on a surface of the positive current collector, and the positive active layer comprises the positive electrode active material according to any one of claims 1 to 11.

13. The electrochemical device according to claim 12, wherein a charge cut-off voltage of the electrochemical device is greater than or equal to 4.6 V.

14. An electronic device, comprising the electrochemical device according to claim 12 or 13.
